# EUROPEAN PATENT SPECIFICATION

(11) **EP 4 189 535 B1**
(45) Date of publication and mention of the grant of the patent: **09.09.2026**
(21) Application number: 21849291.6
(22) Date of filing: 26.07.2021
(51) Int. Cl.: G06F 7/64, H03M 7/30, G06F 1/02, G06F 17/17

(54) **METHODS AND SYSTEMS FOR DECIMATING WAVEFORMS**
VERFAHREN UND SYSTEME ZUR DEZIMIERUNG VON WELLENFORMEN
PROCÉDÉS ET SYSTÈMES DE DÉCIMATION DE FORME D'ONDE

(30) Priority: 29.07.2020 US 202016942538
(43) Date of publication of application: 07.06.2023
(73) Proprietor: Texas Instruments Incorporated, Dallas, TX 75265 (US)
(72) Inventor: GALLAHER, Mitchell Morgan, Tucson, AZ 85745 (US); BARTHEL, Richard, Richardson, TX 75082 (US)
(74) Representative: Zeller, Andreas
(86) International application number: PCT/US2021/043115
(87) International publication number: WO 2022/026353

(56) References cited:
- US-A- 5 548 540
- US-A- 5 623 935
- US-A1- 2007 241 806
- US-A1- 2012 268 303
- US-A1- 2015 171 998
- HUNG NGUYEN QUOC VIET ET AL: "An Evaluation of Model-Based Approaches to Sensor Data Compression", IEEE TRANSACTIONS ON KNOWLEDGE AND DATA ENGINEERING, IEEE SERVICE CENTRE , LOS ALAMITOS , CA, US, vol. 25, no. 11, 1 November 2013 (2013-11-01), pages 2434 - 2447, XP011527652, ISSN: 1041-4347, [retrieved on 20130919], DOI: 10.1109/TKDE.2012.237
- ROBERT RIEGER ET AL: "A Signal Based Clocking Scheme for A/D Converters in Body Sensor Networks", TENCON 2006. 2006 IEEE REGION 10 CONFERENCE, IEEE, PI, 1 November 2006 (2006-11-01), pages 1 - 4, XP031069121, ISBN: 978-1-4244-0548-0

## Description

### BACKGROUND

The disclosure generally relates to digital signal processing, and particularly to methods and systems for decimating waveforms using second order derivatives.

### Description of the Related Art:

In engineering and scientific applications, it is often necessary to analyze stored waveforms consisting of hundreds of megabytes of data. These waveforms may require a substantial amount of hard drive storage space and require a significant amount of time to import data from the hard drive, thereby slowing rendering speed (e.g., video rendering).

In order to reduce hard drive storage space requirements, increase data import speed and increase rendering speed, waveforms consisting of large datasets are sometimes decimated (i.e., down-sampled). Existing methods decimate waveforms using a fixed sampling rate which eliminates critical data points between sampling intervals. Consequently, critical data associated with ringing on sharp transients, for example, may be lost. Although an increase in sampling frequency can reduce loss of datapoints, increasing the sampling frequency results in more datapoints which must be stored. Thus, existing decimation methods suffer from drawbacks including a loss of granularity and an inability to significantly reduce the data points. In the European Search Opinion the following documents have been discussed: "An Evaluation of Model-Based Approaches to Sensor Data Compression" HUNG NGUYEN QUOC VIET ET AL, IEEE TRANSACTIONS ON KNOWLEDGE AND DATA ENGINEERING, XP011527652; and US 5,623 935 relating to data compression methods and an apparatus for use with physiological data.

### SUMMARY

Various aspects of the present disclosure are directed to methods and systems for decimating a waveform. In one aspect, a method, as defined in appended claim 1, includes dividing the waveform into a plurality of sections and performing a second order derivative operation on the sections and determining corresponding derivative values. The method further includes classifying the section as a linear region if the derivative value is within a threshold range and classifying the section as a non- linear region if the derivative value is outside the threshold range. The method also includes

decimating data points of the linear regions using a coarse decimation to generate coarsely decimated data points and decimating data points of the non-linear regions using a fine decimation to generate finely decimated data points. The method also includes reconstructing a waveform using the coarsely and finely decimated data points.

In an additional aspect of the present disclosure, the method includes decimating the data points by the coarse decimation using a coarse decimation ratio and decimating the data points by the fine decimation using a fine decimation ratio.

In an additional aspect of the present disclosure, the threshold range comprises a positive threshold value and a negative threshold value. The derivative value is within the threshold range if the derivative value is less than the positive threshold value and is greater than the negative threshold value. The derivative value is outside the threshold range if the derivative value is greater than the positive threshold value or is less than the negative threshold value.

In an additional aspect of the present disclosure, a method of decimating a waveform, as defined in appended claim 1, includes dividing the waveform into a plurality of sections and performing a second order derivative operation on the sections and determining corresponding derivative values. The method further includes classifying the section as a linear region if the derivative value is less than a positive threshold value and is greater than a negative threshold value and classifying the section as a non-linear region if the derivative value is greater than the positive threshold value or is less than the negative threshold value. The method also includes decimating data points of the linear regions using a coarse decimation ratio to generate coarsely decimated data points and decimating data points of the non-linear regions using a fine decimation ratio to generate finely decimated data points. The method also includes reconstructing a waveform using the coarsely and finely decimated data points.

In an additional aspect of the present disclosure, a non-transitory computer-readable medium, as defined in appended claim 8, has program code recorded thereon. The program code includes program code to divide a waveform into a plurality of sections and program code to perform a second order derivative operation on the sections and to determine corresponding derivative values. The program code includes program code to classify the section as a linear region if the derivative value is within a threshold range and to classify the section as a non-linear region if the derivative value is outside the threshold range. The program code includes program code to decimate data points of the linear regions using a coarse decimation to generate coarsely decimated data points and program code to decimate data points of the non-linear regions using a fine decimation to generate finely decimated data points. The program code includes program code to reconstruct a waveform using the coarsely and finely decimated data points. The program code to decimate data points of the linear regions using the coarse decimation includes program code to decimate the data points using a coarse decimation ratio. The program code to decimate data points of the non-linear regions using the fine decimation includes program code to decimate the data points using a fine decimation ratio.

In an additional aspect of the present disclosure, a system for decimating a waveform, as defined in appended claim 12, includes a storage device configured to store the waveform. The system further includes a resampler coupled to receive the waveform and configured divide the waveform into a plurality of sections. The resampler is configured to perform a second order derivative operation on the sections and is configured to determine corresponding derivative values. The resampler is configured to classify the section as a linear region if the derivative value is within a threshold range and is configured to classify the section as a non-linear region if the derivative value is outside the threshold range. The resampler is configured to decimate data points of the linear regions using a coarse decimation to generate coarsely decimated data points and is configured to decimate data points of the non-linear regions using a fine decimation to generate finely decimated data points. The resampler is configured to reconstruct a waveform using the coarsely and finely decimated data points. The system also includes a display monitor coupled to receive the reconstructed waveform and to display the reconstructed waveform.

### BRIEF DESCRIPTION OF THE DRAWINGS

FIG. 1 illustrates a waveform decimated in accordance with embodiments of the present disclosure.
FIGS. 2-4 illustrate waveforms which are decimated in accordance with embodiments of the present disclosure.
FIG. 5 is a flow diagram in accordance with embodiments of the present disclosure.
FIG. 6 illustrates an exemplary system configured to decimate waveforms in accordance with embodiments of the present disclosure.

DETAILED DESCRIPTION OF EXAMPLE EMBODIMENTS

Reference will now be made in detail to the embodiments, examples of which are illustrated in the accompanying drawings, in which some, but not all embodiments are shown. Indeed, the concepts may be embodied in many different forms and should not be construed as limiting herein. Rather, these descriptions are provided so that this disclosure will satisfy applicable requirements.

Various aspects of the present disclosure are directed to methods and systems for decimating waveforms involving large datasets using second order derivatives. In one aspect of the present disclosure, a second order derivative operation is performed on a waveform having large datasets to identify linear and non-linear regions of the waveform. The waveform can be produced by a sensor or may be acquired by an oscilloscope and stored in memory. The data points of the linear regions are decimated using a coarse decimation method to generate a reduced set of data points, referred to as coarsely decimated data points. The data points of the non-linear regions are decimated using a fine decimation method to generate a reduced set of data points, referred to as finely decimated data points. The coarse decimation method applies a smaller decimation ratio than the fine decimation method. The waveform is then reconstructed based on the union of the coarsely decimated data points of the linear regions and the finely decimated data points of the non-linear regions. The foregoing method reduces storage space required by replacing millions of data points with a reduced number number of data points, thus decreasing hard drive storage space requirements, improving data import time, and increasing rendering speed.

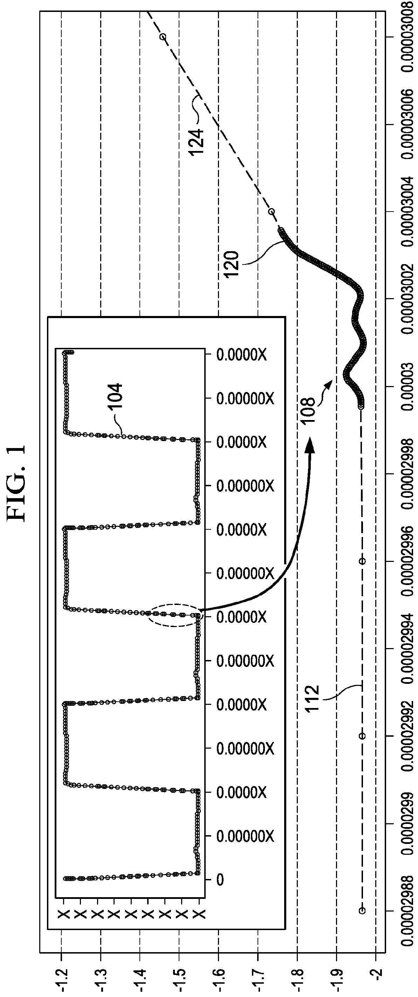

FIG. 1 illustrates a waveform having a large dataset which may be decimated in accordance with embodiments of the present disclosure. With reference to FIG. 1, a square waveform 104 is divided into discrete sections or segments, each section or segment having N data points. For example, a PC configured to perform the decimation may have 16GB of memory available to retrieve data from a hard drive which stores a waveform having 64GB of data. The total waveform size (i.e., 64GB) is divided by the amount of available memory (16GB) to determine the number of discrete segments.

In accordance with embodiments of the disclosure, the M sections are analyzed to locate linear and non-linear regions of the waveform. The square wave 104 exhibits linear characteristics in regions where the waveform has a constant value and in regions where the waveform has a constant rate of change or slope. In the linear regions, the waveform can be represented by equations of the form *y* = *K₁,* or *f(x) = mx +* C, where *K₁* and C are constants and *m* is the rate of change or slope. The square wave 104 exhibits non-linear characteristics in regions where the waveform does not have a constant value and in regions where the waveform does not have a constant rate of change or slope. In the non-linear regions, the waveform can be represented by a polynomial equation of the form *f(x) = aₙxⁿ + aₙ₋₁x ⁿ⁻¹ +* . . . *+ a₂x ² + a₁x + a⁰* where *a* is the coefficient of the polynomial.

With continuing reference to FIG. 1, a section 108 from the square waveform 104 is expanded to illustrate non-linear and linear regions. As shown, the expanded section 108 exhibits linear characteristics in a region 112 where it has a constant value, then exhibits non-linear characteristics in a region 120, and then exhibits linear characteristics in a region 124 where it has a constant rate of change or slope.

In one aspect of the present disclosure, linear and non-linear regions are identified by performing a second order derivative operation on the sections of the waveform. A second order derivative module may be configured to perform the second order derivative operation. Consider, for example, a section of the waveform is represented by *y₁ = x₁(t).* Thus, the second order derivative is *d²y₁*/*dt² = d²x₁(t)*/*dt².* The second order derivative is compared to a threshold range which comprises positive and negative threshold values. If the second order derivative is within the positive and negative threshold values, the section is classified as a linear region. If the second order derivative is greater than the positive threshold value or is less than the negative threshold value, the section is classified as a non-linear region. In this manner, the data points of the sections are classified as either linear or non-linear. In an exemplary embodiment, the second order derivative value of the non-linear region is non-zero.

In an exemplary embodiment, the positive and negative threshold values are determined by analyzing the second order derivative data, and by calculating the mean and standard deviation of the second order derivative data.

In an exemplary embodiment, data points of the linear regions are decimated to generate a reduced number of data points. In an exemplary embodiment, data points of the linear regions can be decimated by replacing the original data points with only two endpoints (i.e., x, y coordinates) forming a line. In another exemplary embodiment, the original data points of the linear regions can be replaced by selecting only a subset of the data points. This approach can reduce, for example, millions of data points down to hundreds of data points.

In an exemplary embodiment, the data points can be decimated using a decimation ratio which is defined as the ratio of data points preserved (Y) and the original number of data points (X). For example, given a decimation ratio of 1:10, the first data point is preserved and the subsequent nine data points are discarded. As another example, given a decimation ratio of 1:100, the first data point is preserved and the subsequent 99 data points are discarded.

In an exemplary embodiment, linear regions are decimated by replacing Xc original data points with a reduced subset of Yc data points, whose ratio is called the coarse decimation ratio Dc. The coarse decimation ratio Dc can be represented as Dc = (Yc/Xc). Non-linear regions are decimated by using a higher decimation ratio called the fine decimation ratio D_{F}. The fine decimation ratio is represented as D_{F} = (Y_{F}/X_{F}). The use of both coarse decimation ratio (e.g. 1/100) and fine decimation ratio (e.g. 1/1) allows preservation of fidelity of the waveform and also allows a high degree of compression. The coarse decimation ratio is less than the fine decimation ratio. Thus, the non-linear regions are decimated to a lesser degree than the linear regions to preserve the fidelity of the waveform.

Consider, for example, a second order derivation operation is performed on a waveform. The original waveform consists of 1000 data points with a Δt = 1 µs. The waveform is split into 10 sections, each section having 100 data points. Based on the second order derivative operation, the first 9 sections are classified as linear regions and the last section is classified as a non-linear region. Accordingly, the first 9 sections are each decimated using a coarse decimation ratio (e.g., Dc = 1/100 ) and their data points are replaced by just one data point per section, i.e., the data points of the first 9 sections are replaced by 9 data points, resulting in a Δt = 100µs. The last section is decimated using a fine decimation ratio (D_{F} = 1/1 ) and its data points are preserved, resulting in a Δt = 1 µs. Thus, depending on whether the data points are in linear or non-linear regions, a decision is made about how many data points are preserved in each time period.

In one aspect of the present disclosure, a waveform is reconstructed based on the union of the coarsely decimated data points of the linear regions and the finely decimated data points of the non-linear regions. The reconstructed waveform can be displayed on a monitor.

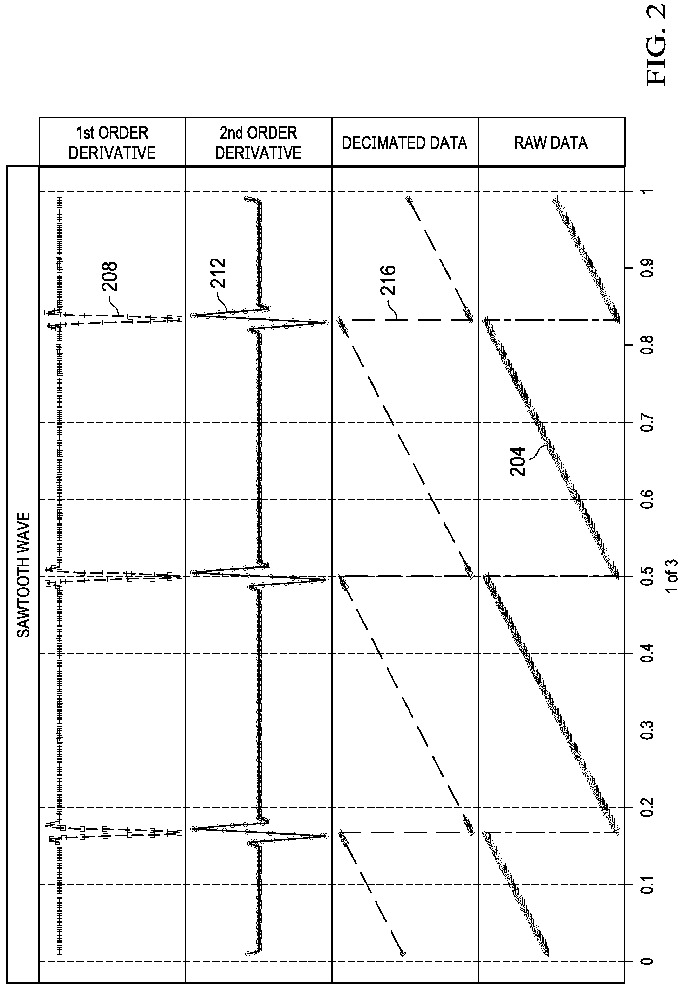

FIG. 2 illustrates a sawtooth waveform 204 which is decimated in accordance with disclosed embodiments. The original waveform consisting of data points is stored in memory. A second order derivative operation is performed by first performing a first order derivative operation on the waveform 204 and then performing another derivative operation on the first order derivative. For illustrative purposes, a first order derivative 208 and a second order derivative 212 are shown. Using the second order derivative 212, linear and non-linear regions of the waveform 204 are identified. The data points of the linear regions are decimated using a coarse decimation ratio to produce coarsely decimated data points, and the data points of the non-linear regions are decimated using a fine decimation ratio to produce finely decimated data points. A reconstructed waveform 216 includes the union of the coarsely decimated data points from the linear regions and the finely decimated data points from the non-linear regions. The original wave form 204 has 1000 data points, but the reconstructed waveform 216 has only 125 data points, thus resulting in a 87.5% reduction in data points.

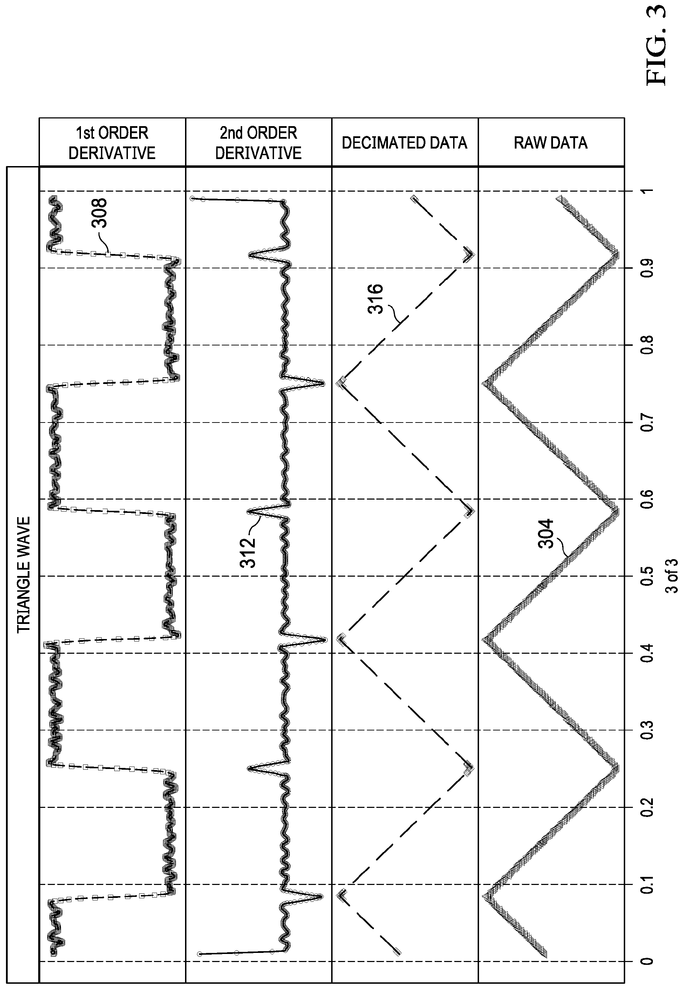

FIG. 3 illustrates a triangle waveform 304 which is decimated in accordance with disclosed embodiments. The original waveform consisting of data points is stored in memory. A first order derivative 308 and a second order derivative 312 are shown for illustrative purposes. The second order derivative 312 is used to identify linear and non-linear regions of the triangle waveform 304. The data points of the linear regions are decimated using a coarse decimation ratio, and the data points of the non-linear regions are decimated using a fine decimation ratio. A reconstructed waveform 316 includes the union of the coarsely decimated data points from the linear regions and the finely decimated data points from the non-linear regions. The reconstructed waveform 316 is rendered with only 96 data points compared to the original waveform which has 1000 data points, thus realizing a 90.4% reduction in data points.

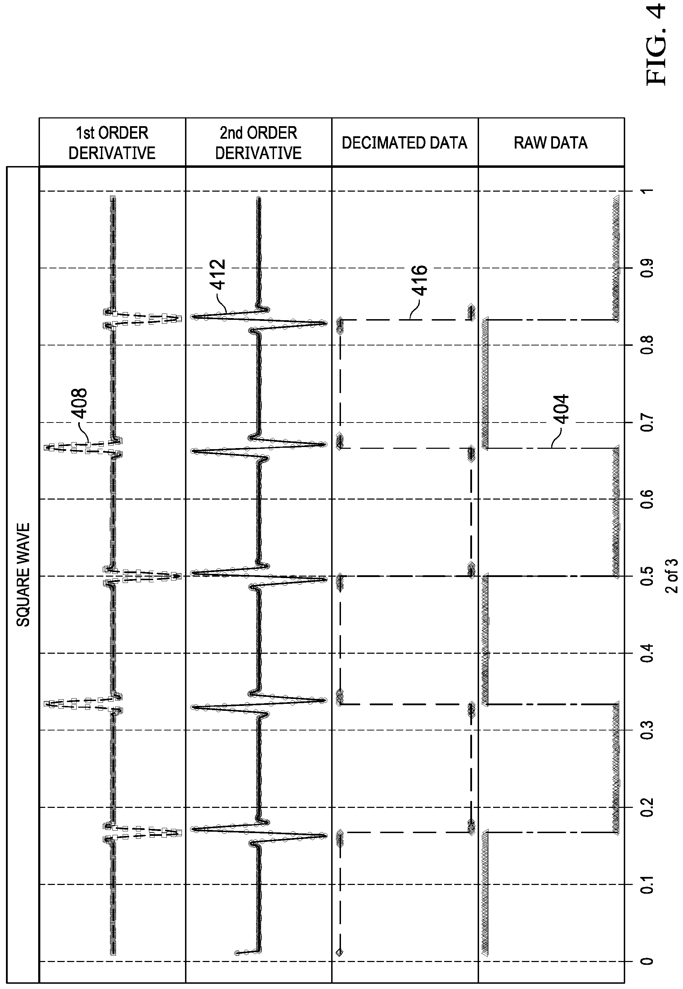

FIG. 4 illustrates a square waveform 404 which is decimated in accordance with disclosed embodiments. The original waveform consisting of data points is stored in memory. A first order derivative 408 and a second order derivative 412 are shown for illustrative purposes. The second order derivative 412 is used to identify linear and non-linear regions of the square waveform 404. The data points of the linear regions are decimated using a coarse decimation, and the data points of the non-linear regions are decimated using a fine decimation ratio. A reconstructed waveform 416 includes the union of the coarsely decimated data points from the linear regions and the finely decimated data points from the non-linear regions. The reconstructed waveform 416 is rendered with only 178 data points, compared to the original waveform 404 which has 1000 data points, thus realizing an 82.2% reduction in data points.

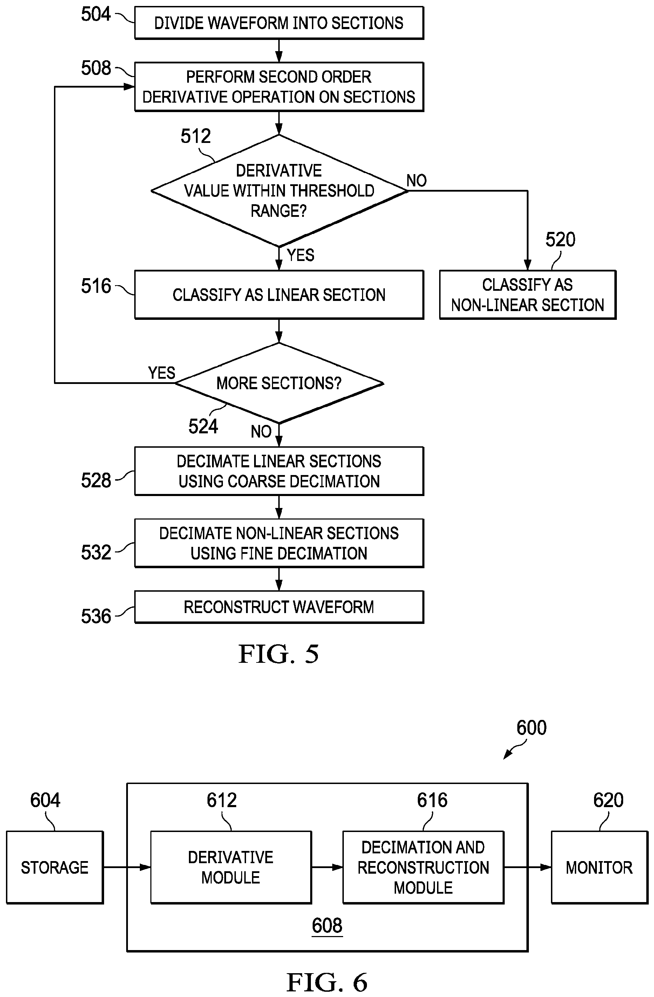

FIG. 5 is a high-level flow diagram of an exemplary method in accordance with an embodiment of the present disclosure. At a block 504, a waveform is divided into a plurality of sections. At a block 508, a second order derivation operation is performed on the sections and derivative values are determined. At a block 512, the derivative values are compared to a threshold range (e.g., positive and negative threshold values). If the derivative value is within the threshold range, at a block 516 the section is classified as a linear region. If the derivative value is outside the threshold range (i.e., greater than the positive threshold value or less than the negative threshold value), at a block 520 the section is classified as a non-linear region. At a block 524, a decision is made if there are more sections. If there are more sections, the flow returns to the block 508. If there are no more sections, at a block 528, data points of the linear regions are decimated using a coarse decimation ratio, resulting in a reduced number of data points (i.e., coarsely decimated data points). At a block 532, data points of the non-linear regions are decimated using a fine decimation ratio, resulting in a reduced number of data points (i.e., finely decimated data points). At a block 536, the waveform is reconstructed from the coarsely decimated data points of the linear regions and finely decimated data points of the non-linear regions.

FIG. 6 illustrates an exemplary system 600 configured to decimate a waveform in accordance with disclosed embodiments. The system 600 includes a storage device 604 configured to store the waveform. A resampler 608 is coupled to receive the waveform. The resampler 608 is configured to divide the waveform into a plurality of sections. The resampler 608 includes a second order derivative module 612 configured to perform a second order derivative operation on the sections to identify linear and non-linear regions. If the derivative value is within a threshold range, the second order derivative module 612 classifies the section as a linear region, and if the derivative value is outside a threshold value, the second order derivative module 612 classifies the section as a non-linear region. The resampler 608 includes a decimation and reconstruction module 616 configured to decimate data points of the linear regions using a coarse decimation ratio and to decimate the non-linear regions using a fine decimation ratio. The fine decimation ratio is greater than the coarse decimation ratio. Thus, the non-linear regions are decimated to a lesser degree to preserve the fidelity of the waveform. The decimation and reconstruction module 616 reconstructs a waveform based on the coarsely decimated data points of the linear regions and the finely decimated data points of the non-linear regions. The reconstructed waveform can be displayed on a monitor 620.

Variations to the system 600 within the scope of the present disclosure are possible. The resampler 608 may be replaced with an FPGA, an ASIC, a microprocessor, a finite state machine (FSM) or software configured to perform the second derivative operation to decimate a waveform and to reconstruct the waveform using a reduced number of data points.

In one aspect of the present disclosure, a non-transitory computer-readable medium having program code recorded thereon includes program code to receive a waveform, program code to divide the waveform into a plurality of sections, program code to perform a second order derivative operation on the sections and to determine corresponding derivative values, program code to classify the sections as a linear region if the derivative value is within a threshold range and to classify the section as a non-linear region if the derivative value is outside the threshold range, and program code to decimate the linear regions to generate coarsely decimated linear regions with a reduced number of data points, and program code to decimate the non-linear regions to generate finely decimated non-linear regions with a reduced number of data points.

Various illustrative components, blocks, modules, circuits, and steps have been described above in general terms of their functionality. Whether such functionality is implemented as hardware or software depends upon the particular application and design constraints imposed on the overall system. The described functionality may be implemented in varying ways without departing from the scope as defined by the appended claims.

For simplicity and clarity, the full structure and operation of all systems suitable for use with the present disclosure is not being depicted or described herein. Instead, only so much of a system as is unique to the present disclosure or necessary for an understanding of the present disclosure is depicted and described.

## Claims

1. A method of decimating a waveform performed by a device, comprising:
dividing the waveform into a plurality of sections (502);
performing a second order derivative operation on the sections and determining corresponding derivative values (508);
if the derivative value is within a threshold range (512), classifying the section as a linear region (516);
if the derivative value is outside the threshold range (512), classifying the section as a non-linear region (520);
decimating data points of the linear regions using a coarse decimation to generate first decimated data points (528);
decimating data points of the non-linear regions using a fine decimation to generate second decimated data points (532);
wherein the data points of the non-linear regions are decimated by the fine decimation to a lesser degree than the data points of the linear regions by the coarse decimation; and
decimating the linear regions comprises representing the linear regions by x, y coordinates of endpoints.

2. The method of claim 1, wherein the threshold range comprises a positive threshold value and a negative threshold value.

3. The method of claim 1, wherein the derivative value is within the threshold range if the derivative value is less than a positive threshold value and is greater than a negative threshold value.

4. The method of claim 1, wherein the derivative value is outside the threshold range if the derivative value is greater than a positive threshold value or is less than a negative threshold value.

5. The method of claim 1, wherein the derivative value of the non-linear regions is non-zero.

6. The method of claim 1, wherein:
if the derivative value is less than a positive threshold value and is greater than a negative threshold value, classifying the section as a linear region;
if the derivative value is greater than the positive threshold value or is less than the negative threshold value, classifying the section as a non-linear region.

7. The method of claim 6, wherein the second order derivative value of the non-linear regions is non-zero.

8. A non-transitory computer-readable medium having program code recorded thereon, the program code comprising:
program code to divide a waveform into a plurality of sections;
program code to perform a second order derivative operation on the sections and to determine corresponding derivative values;
program code to classify the section as a linear region if the derivative value is within a threshold range and to classify the section as a non-linear region if the derivative value is outside the threshold range;
program code to decimate data points of the linear regions using a coarse decimation to generate first decimated data points representing the linear regions by x, y coordinates of endpoints;
program code to decimate data points of the non-linear regions using a fine decimation to generate second decimated data points;
wherein the data points of the non-linear regions are decimated by the fine decimation to a lesser degree than the data points of the linear regions by the coarse decimation.

9. The non-transitory computer-readable medium of claim 8, wherein the threshold range comprises a positive threshold value and a negative threshold value.

10. The non-transitory computer-readable medium of claim 8, wherein the derivative value is within the threshold range if the derivative value is less than a positive threshold value and is greater than a negative threshold value.

11. The non-transitory computer-readable medium of claim 8, wherein the derivative value is outside the threshold range if the derivative value is greater than a positive threshold value or is less than a negative threshold value.

12. A system for decimating a waveform, comprising:
a storage device configured to store the waveform;
a resampler coupled to receive the waveform and configured to divide the waveform into a plurality of sections, the resampler configured to perform a second order derivative operation on the sections and to determine corresponding derivative values, the resampler configured to classify the section as a linear region if the derivative value is within a threshold range and to classify the section as a non-linear region if the derivative value is outside the threshold range, the resampler configured to decimate data points of the linear regions using a coarse decimation to generate first decimated data points representing the linear regions by x, y coordinates of endpoints and configured to decimate data points of the non-linear regions using a fine decimation to generate second decimated data points, the resampler configured to reconstruct a waveform using the second and second decimated data points;
wherein the data points of the non-linear regions are decimated by the fine decimation to a lesser degree than the data points of the linear regions by the coarse decimation.

13. The system of claim 12, wherein the threshold range comprises a positive threshold value and a negative threshold value.

14. The system of claim 12, wherein the derivative value is within the threshold range if the derivative value is less than a positive threshold value and is greater than a negative threshold value.

15. The system of claim 12, wherein the derivative value is outside the threshold range if the derivative value is greater than a positive threshold value or is less than a negative threshold value.

16. The system of claim 12, wherein the derivative value of the non-linear regions is non-zero.

## Patentansprüche

1. Verfahren zum Dezimieren einer Wellenform, das von einer Vorrichtung durchgeführt wird, umfassend:
Teilen der Wellenform in eine Vielzahl von Sektoren (502);
Durchführen einer Ableitungsoperation zweiter Ordnung an den Sektoren und Ermitteln von entsprechenden Ableitungswerten (508);
wenn der Ableitungswert innerhalb eines Schwellenwertbereichs (512) liegt, Klassifizieren des Sektors als ein lineares Gebiet (516);
wenn der Ableitungswert außerhalb des Schwellenbereichs (512) liegt, Klassifizieren des Abschnitts als ein nicht-lineares Gebiet (520);
Dezimieren von Datenpunkten der linearen Gebiete unter Verwendung einer groben Dezimierung, um erste dezimierte Datenpunkte zu erzeugen (528);
Dezimieren von Datenpunkten der nicht-linearen Gebiete unter Verwendung einer feinen Dezimierung, um zweite dezimierte Datenpunkte zu erzeugen (532);
wobei die Datenpunkte der nicht-linearen Gebiete durch die feine Dezimierung in einem geringeren Grad dezimiert werden als die Datenpunkte der linearen Gebiete durch die grobe Dezimierung; und
wobei das Dezimieren der linearen Gebiete ein Darstellen der linearen Gebiete durch x-, y-Koordinaten von Endpunkten umfasst.

2. Verfahren nach Anspruch 1, wobei der Schwellenwertbereich einen positiven Schwellenwert und einen negativen Schwellenwert umfasst.

3. Verfahren nach Anspruch 1, wobei der Ableitungswert innerhalb des Schwellenwertbereichs liegt, wenn der Ableitungswert kleiner als ein positiver Schwellenwert ist und größer als ein negativer Schwellenwert ist.

4. Verfahren nach Anspruch 1, wobei der Ableitungswert außerhalb des Schwellenwertbereichs liegt, wenn der Ableitungswert größer als ein positiver Schwellenwert ist oder kleiner als ein negativer Schwellenwert ist.

5. Verfahren nach Anspruch 1, wobei der Ableitungswert der nicht-linearen Gebiete ungleich Null ist.

6. Verfahren nach Anspruch 1, wobei
wenn der Ableitungswert kleiner als ein positiver Schwellenwert ist und größer als ein negativer Schwellenwert ist, der Sektor als ein lineares Gebiet klassifiziert wird;
wenn der Ableitungswert größer als der positive Schwellenwert oder kleiner als der negative Schwellenwert ist, der Sektor als ein nicht-lineares Gebiet klassifiziert wird.

7. Verfahren nach Anspruch 6, wobei der Ableitungswert zweiter Ordnung der nicht-linearen Gebiete ungleich Null ist.

8. Nicht-flüchtiges computerlesbares Medium, in dem ein Programmcode aufgezeichnet ist, wobei der Programmcode umfasst:
einen Programmcode zum Teilen einer Wellenform in eine Vielzahl von Sektoren;
einen Programmcode zum Durchführen einer Ableitungsoperation zweiter Ordnung an den Sektoren und zum Ermitteln von entsprechenden Ableitungswerten;
einen Programmcode zum Klassifizieren des Sektors als ein lineares Gebiet, wenn der Ableitungswert innerhalb eines Schwellenwertbereichs liegt, und zum Klassifizieren des Sektors als ein nicht-lineares Gebiet, wenn der Ableitungswert außerhalb des Schwellenwertbereichs liegt;
einen Programmcode zum Dezimieren von Datenpunkten der linearen Gebiete unter Verwendung einer groben Dezimierung, um erste dezimierte Datenpunkte zu erzeugen, welche die linearen Gebiete durch x, y-Koordinaten von Endpunkten darstellen;
einen Programmcode zum Dezimieren von Datenpunkten der nicht-linearen Gebiete unter Verwendung einer feinen Dezimierung, um zweite dezimierte Datenpunkte zu erzeugen;
wobei die Datenpunkte der nicht-linearen Gebiete durch die feine Dezimierung in einem geringeren Grad dezimiert werden als die Datenpunkte der linearen Gebiete durch die grobe Dezimierung.

9. Nicht-flüchtiges computerlesbares Medium nach Anspruch 8, wobei der Schwellenwertbereich einen positiven Schwellenwert und einen negativen Schwellenwert umfasst.

10. Nicht-flüchtiges computerlesbares Medium nach Anspruch 8, wobei der Ableitungswert innerhalb des Schwellenwertbereichs liegt, wenn der Ableitungswert kleiner als ein positiver Schwellenwert ist und größer als ein negativer Schwellenwert ist.

11. Nicht-flüchtiges computerlesbares Medium nach Anspruch 8, wobei der Ableitungswert außerhalb des Schwellenwertbereichs liegt, wenn der Ableitungswert größer als ein positiver Schwellenwert ist oder kleiner als ein negativer Schwellenwert ist.

12. System zum Dezimieren einer Wellenform, umfassend:
eine Speichervorrichtung, die konfiguriert ist zum Speichern der Wellenform;
einen Abtastratenwandler, der angeschlossen ist, um die Wellenform zu empfangen und konfiguriert ist, um die Wellenform in eine Vielzahl von Sektoren zu teilen, wobei der Abtastratenwandler konfiguriert ist, um eine Ableitungsoperation zweiter Ordnung an den Sektoren durchzuführen und um entsprechende Ableitungswerte zu ermitteln, wobei der Abtastratenwandler konfiguriert ist, um den Sektor als ein lineares Gebiet zu klassifizieren, wenn der Ableitungswert innerhalb eines Schwellenwertbereichs liegt, und den Sektor als ein nicht-lineares Gebiet zu klassifizieren, wenn der Ableitungswert außerhalb des Schwellenwertbereichs liegt, wobei der Abtastratenwandler konfiguriert ist zum Dezimieren von Datenpunkten der linearen Gebiete unter Verwendung einer groben Dezimierung, um erste dezimierte Datenpunkte zu erzeugen, welche die linearen Regionen durch x-, y-Koordinaten von Endpunkten darstellen, und konfiguriert ist zum Dezimieren von Datenpunkten der nicht-linearen Gebiete unter Verwendung einer feinen Dezimierung, um zweite dezimierte Datenpunkte zu erzeugen, wobei der Abtastratenwandler konfiguriert ist, um eine Wellenform unter Verwendung der ersten und der zweiten dezimierten Datenpunkte wiederherzustellen;
wobei die Datenpunkte der nicht-linearen Gebiete durch die feine Dezimierung in einem geringeren Grad dezimiert werden als die Datenpunkte der linearen Gebiete durch die grobe Dezimierung.

13. System nach Anspruch 12, wobei der Schwellenwertbereich einen positiven Schwellenwert und einen negativen Schwellenwert umfasst.

14. System nach Anspruch 12, wobei der Ableitungswert innerhalb des Schwellenwertbereichs liegt, wenn der Ableitungswert kleiner als ein positiver Schwellenwert ist und größer als ein negativer Schwellenwert ist.

15. System nach Anspruch 12, wobei der Ableitungswert außerhalb des Schwellenwertbereichs liegt, wenn der Ableitungswert größer als ein positiver Schwellenwert ist oder kleiner als ein negativer Schwellenwert ist.

16. System nach Anspruch 12, wobei der Ableitungswert der nicht-linearen Gebiete ungleich Null ist.

## Revendications

1. Procédé de décimation d'une forme d'onde exécuté par un dispositif, le procédé comprenant les étapes suivantes :
diviser la forme d'onde en une pluralité de sections (502) ;
exécuter une opération de dérivée du deuxième ordre sur les sections et déterminer les valeurs dérivées correspondantes (508) ;
si la valeur dérivée se trouve dans une plage seuil (512), classer la section comme une région linéaire (516) ;
si la valeur dérivée se trouve en dehors de la plage seuil (512), classer la section comme une région non linéaire (520) ;
décimer des points de données des régions linéaires à l'aide d'une décimation grossière pour générer des premiers points de données décimés (528) ;
décimer des points de données des régions non linéaires à l'aide d'une décimation fine pour générer des deuxièmes points de données décimés (532) ;
où les points de données des régions non linéaires sont décimés par la décimation fine à un degré moindre que les points de données des régions linéaires par la décimation grossière ; et la décimation des régions linéaires comprend de représenter les régions linéaires par les coordonnées x, y des extrémités.

2. Procédé selon la revendication 1, dans lequel la plage seuil comprend une valeur seuil positive et une valeur seuil négative.

3. Procédé selon la revendication 1, dans lequel la valeur dérivée se situe dans la plage seuil si la valeur dérivée est inférieure à une valeur seuil positive et est supérieure à une valeur seuil négative.

4. Procédé selon la revendication 1, dans lequel la valeur dérivée se situe en dehors de la plage seuil si la valeur dérivée est supérieure à une valeur seuil positive ou est inférieure à une valeur seuil négative.

5. Procédé selon la revendication 1, dans lequel la valeur dérivée des régions non linéaires est non nulle.

6. Procédé selon la revendication 1, dans lequel :
si la valeur dérivée est inférieure à une valeur seuil positive et supérieure à une valeur seuil négative, classer la section comme une région linéaire ;
si la valeur dérivée est supérieure à la valeur seuil positive ou inférieure à la valeur seuil négative, classer la section comme une région non linéaire.

7. Procédé selon la revendication 6, dans lequel la valeur dérivée du deuxième ordre des régions non linéaires est non nulle.

8. Support non transitoire lisible par ordinateur sur lequel est enregistré un code de programme, le code de programme comprenant :
un code de programme pour diviser une forme d'onde en une pluralité de sections ;
un code de programme pour exécuter une opération dérivée du deuxième ordre sur les sections et déterminer les valeurs dérivées correspondantes ;
un code de programme pour classer la section en tant que région linéaire si la valeur dérivée se situe dans une plage seuil et pour classer la section en tant que région non linéaire si la valeur dérivée se situe en dehors de la plage seuil ;
un code de programme pour décimer les points de données des régions linéaires en utilisant une décimation grossière pour générer des premiers points de données décimés représentant les régions linéaires par les coordonnées x, y des points d'extrémité ;
un code de programme pour décimer les points de données des régions non linéaires en utilisant une décimation fine pour générer des deuxièmes points de données décimés ;
où les points de données des régions non linéaires sont décimés par la décimation fine à un degré moindre que les points de données des régions linéaires par la décimation grossière.

9. Support non transitoire lisible par ordinateur selon la revendication 8, dans lequel la plage seuil comprend une valeur seuil positive et une valeur seuil négative.

10. Support non transitoire lisible par ordinateur selon la revendication 8, dans lequel la valeur dérivée se situe dans la plage seuil si la valeur dérivée est inférieure à une valeur seuil positive et est supérieure à une valeur seuil négative.

11. Support non transitoire lisible par ordinateur selon la revendication 8, dans lequel la valeur dérivée se situe en dehors de la plage seuil si la valeur dérivée est supérieure à une valeur seuil positive ou est inférieure à une valeur seuil négative.

12. Système de décimation d'une forme d'onde, comprenant :
un dispositif de stockage configuré pour stocker la forme d'onde ;
un rééchantillonneur couplé pour recevoir la forme d'onde et configuré pour diviser la forme d'onde en une pluralité de sections, le rééchantillonneur étant configuré pour exécuter une opération de dérivée du deuxième ordre sur les sections et pour déterminer les valeurs dérivées correspondantes, le rééchantillonneur étant configuré pour classer la section en tant que région linéaire si la valeur dérivée se situe à l'intérieur d'une plage seuil et pour classer la section en tant que région non linéaire si la valeur dérivée se situe en dehors de la plage seuil, le rééchantillonneur étant configuré pour décimer des points de données des régions linéaires en utilisant une décimation grossière pour générer des premiers points de données décimés représentant les régions linéaires par des coordonnées x, y des points d'extrémité et configuré pour décimer des points de données des régions non linéaires en utilisant une décimation fine pour générer des deuxièmes points de données décimés, le rééchantillonneur étant configuré pour reconstruire une forme d'onde en utilisant les premiers et deuxièmes points de données décimés ;
où les points de données des régions non linéaires sont décimés par la décimation fine à un degré moindre que les points de données des régions linéaires par la décimation grossière.

13. Système selon la revendication 12, dans lequel la plage seuil comprend une valeur seuil positive et une valeur seuil négative.

14. Système selon la revendication 12, dans lequel la valeur dérivée se situe dans la plage seuil si la valeur dérivée est inférieure à une valeur seuil positive et est supérieure à une valeur seuil négative.

15. Système selon la revendication 12, dans lequel la valeur dérivée se situe en dehors de la plage seuil si la valeur dérivée est supérieure à une valeur seuil positive ou est inférieure à une valeur seuil négative.

16. Système selon la revendication 12, dans lequel la valeur dérivée des régions non linéaires est non nulle.
